# EUROPEAN PATENT APPLICATION

(11) **EP 3 960 563 A1**
(43) Date of publication of application: **02.03.2022**
(21) Application number: 20204978.9
(22) Date of filing: 30.10.2020
(51) Int. Cl.: B60W 30/095, B60W 40/09, B60W 50/02

(54) **DRIVING SUPPORT METHOD AND APPARATUS**

(30) Priority: 01.09.2020 KR 20200111070
(71) Applicant: Infocar Co., Ltd., Daejeon 34129 (KR)
(72) Inventor: CHOI, Moon Kyu, Seoul 04011 (KR); CHOI, Geo Seok, Seoul 03306 (KR); PYO, Gun Ho, Uijeongbu-si 11805 (KR); LIM, Guk Bin, Uijeongbu-si 11813 (KR)
(74) Representative: Nederlandsch Octrooibureau

(57) **Abstract**

A driving support method and apparatus are disclosed. The driving support method according to an example embodiment includes collecting (610) personalized vehicle data, predicting (630) a danger related to driving based on the personalized vehicle data, and supporting (650) a driver of a vehicle based on the predicted danger.

## Description

### BACKGROUND

### 1. Field of the Invention

Example embodiments relate to a driving support method and apparatus.

### 2. Description of the Related Art

It is predicted that the automobile industry will maintain continuous growth by utilizing momentum such as shared vehicles, electric vehicles, autonomous driving, connectivity, and the like, and the vehicle data market that utilizes data generated from vehicles will also grow explosively.

However, in the field of vehicle data, there is a lack of an integrated data analysis platform for generating information on accurate autonomous driving and safe driving in view of B2C, and there is a lack of a personalized interface that is capable of analyzing a driver's style in aspect of safe driving/economic driving in view of B2B.

Therefore, in order to lead the technology and market in the field of vehicle data, a strategic approach to the fourth industrial revolution fields such as big data, artificial intelligence (AI), and autonomous vehicles is required.

### SUMMARY

Aspects provide driving support technology.

According to an aspect, there is provided a driving support method including collecting personalized vehicle data, predicting a danger related to driving based on the personalized vehicle data, and supporting a driver of a vehicle based on the predicted danger.

The collecting may include collecting driving data, vehicle failure data, and dangerous situation data.

The predicting may include predicting whether the driver suddenly accelerates, suddenly decelerates, speeds, and suddenly turns based on the personalized vehicle data.

The predicting may include training a neural network based on the personalized vehicle data, and predicting the danger by using the trained neural network. The training may include training the neural network based on a part of the personalized vehicle data, and verifying the neural network based on a remaining part of the personalized vehicle data.

The training may include training a first neural network based on vehicle failure data, and training a second neural network based on dangerous situation data. The training of the first neural network may include training the first neural network based on a plurality of pieces of driving data. The training of the second neural network may include training the second neural network based on one piece of driving data.

According to another aspect, there is provided a driving support apparatus including a collector configured to collect personalized vehicle data and a processor configured to predict a danger related to driving based on the personalized vehicle data and support a driver of a vehicle based on the predicted danger.

The collector may collect driving data, vehicle failure data, and dangerous situation data.

The processor may predict whether the driver suddenly accelerates, suddenly decelerates, speeds, and suddenly turns based on the personalized vehicle data.

The processor may train a neural network based on the personalized vehicle data, and predict the danger by using the trained neural network. The neural network may be trained based on a part of the personalized vehicle data, and may be verified based on a remaining part of the personalized vehicle data.

The processor may train a first neural network based on vehicle failure data, and may train a second neural network based on dangerous situation data. The first neural network may be trained based on a plurality of pieces of driving data, and the second neural network may be trained based on one piece of driving data.

Additional aspects of example embodiments will be set forth in part in the description which follows and, in part, will be apparent from the description, or may be learned by practice of the disclosure.

### BRIEF DESCRIPTION OF THE DRAWINGS

These and/or other aspects, features, and advantages of the invention will become apparent and more readily appreciated from the following description of example embodiments, taken in conjunction with the accompanying drawings of which:
FIG. 1 illustrates a schematic block diagram of a driving support apparatus according to an example embodiment.
FIG. 2 illustrates an operation of the driving support apparatus illustrated in FIG. 1.
FIG. 3 illustrates an example of a platform included in the driving support apparatus illustrated in FIG. 1.
FIG. 4 illustrates an example of vehicle data.
FIG. 5 illustrates a relationship between driving data, vehicle failure data, and dangerous situation data.
FIG. 6 illustrates a sequence of operations of the driving support apparatus illustrated in FIG. 1.

### DETAILED DESCRIPTION

Hereinafter, example embodiments will be described in detail with reference to the accompanying drawings. The scope of the right, however, should not be construed as limited to the example embodiments set forth herein. Various modifications may be made to the example embodiments. Here, examples are not construed as limited to the example embodiments and should be understood to include all changes, equivalents, and replacements within the idea and the technical scope of the example embodiments.

The terminology used herein is for the purpose of describing particular example embodiments only and is not intended to be limiting. As used herein, the singular forms "a," "an," and "the," are intended to include the plural forms as well, unless the context clearly indicates otherwise. It will be further understood. that the terms "comprises," "comprising," "includes," and/or "including," when used herein, specify the presence of stated features, integers, operations, elements, and/or components, but do not preclude the presence or addition of one or more other features, integers, operations, elements, components, and/or groups thereof.

Unless otherwise defined, all terms, including technical and scientific terms, used herein have the same meaning as commonly understood by those skilled in the art to which the example embodiments pertain. Terms, such as those defined in commonly used dictionaries, are to be interpreted as having a meaning that is consistent with their meaning in the context of the relevant art, and are not to be interpreted in an idealized or overly formal sense unless expressly so defined herein.

Regarding the reference numerals assigned to the components in the drawings, it should be noted that the same components will be designated by the same reference numerals, wherever possible, even though they are shown in different drawings. Also, in the description of example embodiments, detailed description of well-known related structures or functions will be omitted when it is deemed that such description will cause ambiguous interpretation of the example embodiments.

In addition, it will be understood that, although the terms first, second, A, B, (a), (b), and the like may be used herein to describe various components of the example embodiments, these terms are only used to distinguish one component from another component and essential, order, or sequence of corresponding components are not limited by these terms. It will be understood that when one component is referred to as being "connected to", "coupled to", or "linked to" another component, one component may be "connected to", "coupled to", or "linked to" another component via a further component although one component may be directly connected to or directly linked to another component.

A component included in one example embodiment and another component including a function in common with the component will be described using the same designation in other example embodiments. Unless otherwise indicated, a description in one example embodiment may be applied to other example embodiments, and a detailed description will be omitted in an overlapping range.

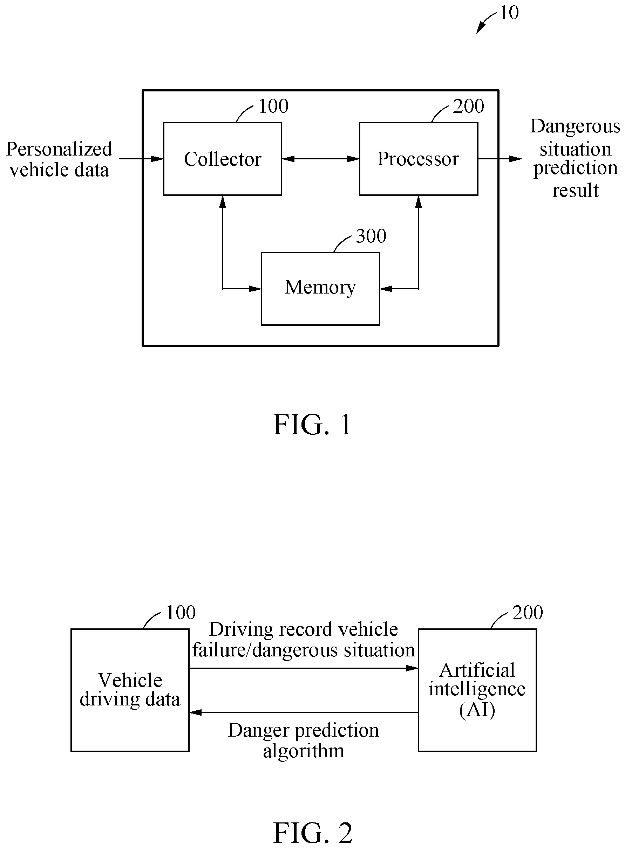

FIG. 1 illustrates a schematic block diagram of a driving support apparatus according to an example embodiment, and FIG. 2 illustrates an operation of the driving support apparatus illustrated in FIG. 1.

Referring to FIGS. 1 and 2, a driving support apparatus 10 may collect vehicle data and support driving of a vehicle driver based on the collected vehicle data. The driving support apparatus 10 may predict a danger based on the vehicle data. The danger may include a danger related to a vehicle and a dangerous situation during driving. That is, the driving support apparatus 10 may predict the danger related to the vehicle and the dangerous situation during driving based on the vehicle data.

The vehicle data may include driving data, vehicle failure data, and dangerous situation data. The driving data may refer to data generated during driving of the vehicle. The driving data may include information on a location according to time, speed, and route of the vehicle. The driving data may include data collected in the vehicle. For example, the driving data may include engine data, smartphone sensor data, and vehicle failure data provided by an electronic control unit (ECU).

The vehicle failure data may refer to data representing a status of the vehicle. For example, the vehicle failure data may include a diagnostic trouble code (DTC). The DTC may be provided from the ECU.

The dangerous situation data may refer to data related to a dangerous situation occurring during driving. The dangerous situation data may refer to data obtained by analyzing data collected in the vehicle. For example, the dangerous situation data may include data representing situations such as a sudden turn, sudden acceleration, sudden deceleration, speeding, idling, and the like.

The driving support apparatus 10 may predict a danger related to driving of the vehicle by using a neural network. The driving support apparatus 10 may train the neural network based on the vehicle data and predict the danger by using the trained neural network.

The driving support apparatus 10 may predict an accurate driving situation based on vehicle data generated from the vehicle and network, and may provide information related to safety to the driver. The driving support apparatus 10 may predict a dangerous situation during driving and generate warning and control signals for securing vehicle safety in real time, thereby preventing an accident and improving driving convenience of the driver.

The danger predicted by the driving support apparatus 10 may include a danger related to vehicle failure and a danger related to driving. The danger related to driving may include a danger caused by the driver. The danger caused by the driver may occur instantaneously in the same way as sudden acceleration, sudden deceleration, a sudden turn, and speeding.

The danger related to vehicle failure may include a failure code (for example, DTC). The danger related to vehicle failure may be detected in real time through the ECU of the vehicle.

The driving support apparatus 10 may predict a danger caused by the driver by training the neural network based on a driving record and dangerous situation. The driving support apparatus 10 may predict the danger related to vehicle failure by training the neural network based on the vehicle failure data (for example, a failure code). The danger related to vehicle failure may include a timing of vehicle failure and a type of vehicle failure.

A training condition for predicting the danger caused by the driver and a training condition for predicting the danger related to vehicle failure may be different from each other.

The artificial intelligence (AI) illustrated in FIG. 2 may include a deep learning model implemented by the neural network. The neural network (or artificial neural network) may include a statistical learning algorithm that mimics neurons of biology in machine learning and cognitive science. In general, the neural network may refer to a model with problem-solving capability by changing a connection strength of synapses through learning of artificial neurons (nodes) that form a network through connection of the synapses.

The neural network may include a deep neural network. The neural network may include a convolutional neural network (CNN), recurrent neural network (RNN), perceptron, feed forward (FF), radial basis network (RBF), deep feed forward (DFF), long short term memory (LSTM), gated recurrent unit (GRU), auto encoder (AE), variational auto encoder (VAE), denoising auto encoder (DAE), sparse auto encoder (SAE), markov chain (MC), hopfield network (HN), boltzmann machine (BM), restricted boltzmann machine (RBM), depp belief network (DBN), deep convolutional network (DCN), deconvolutional network (DN), deep convolutional inverse graphics network (DCIGN), generative adversarial network (GAN), liquid state machine (LSM), extreme learning machine (ELM), echo state network (ESN), deep residual network (DRN), differentiable neural computer (DNC), neural turning machine (NTM), capsule network (CN), kohonen network (KN), and attention network (AN).

The driving support apparatus 10 may include a collector 100 and a processor 200. The driving support apparatus 10 may further include a memory 300.

The collector 100 may collect vehicle data. The vehicle data may include personalized vehicle data. The collector may collect driving data, vehicle failure data, and dangerous situation data.

The personalized vehicle data may refer to vehicle data collected from a user of the driving support apparatus 10. The personalized vehicle data may include driving data for each individual user, vehicle failure data for each individual user, and dangerous situation data for each individual user. The collector 100 may output the collected personalized vehicle data to the processor 200.

The processor 200 may process data stored in the memory 300. The processor 200 may execute a computer-readable code (for example, software) stored in the memory 300 and instructions induced by the processor 200.

The "processor 200" may be a data processing unit implemented in hardware having a circuit with a physical structure for executing desired operations. For example, the desired operations may include a code or instructions included in a program.

For example, the data processing device implemented in hardware may include a microprocessor, a central processing unit, a processor core, a multi-core processor, and a multiprocessor, an application-specific integrated circuit (ASIC), and a field programmable gate array (FPGA).

The processor 200 may predict the danger related to driving based on the personalized vehicle data. The processor 200 may predict whether the driver suddenly accelerates, suddenly decelerates, speeds, suddenly turns, and idles based on the personalized vehicle data.

The processor 200 may train the neural network based on the personalized vehicle data. The processor 200 may predict the danger by using the trained neural network.

For example, the processor 200 may predict a failure of the vehicle by using the driving data as an input of the neural network and using the vehicle failure data as an output of the neural network to train the neural network.

In addition, the processor 200 may predict a dangerous situation by using the driving data as an input of the neural network and using the dangerous situation data as an output of the neural network to train the neural network. The processor 200 may train the neural network based on a part of the personalized vehicle data. The processor 200 may verify the neural network based on a remaining part of the personalized vehicle data.

The neural network may include a plurality of neural networks. For example, the neural network may include a first neural network and a second neural network.

The processor 200 may train the first neural network based on the vehicle failure data. The processor 200 may train the second neural network based on the dangerous situation data.

The processor 200 may train the first neural network based on a plurality of pieces of driving data. The processor 200 may train the second neural network based on one piece of driving data.

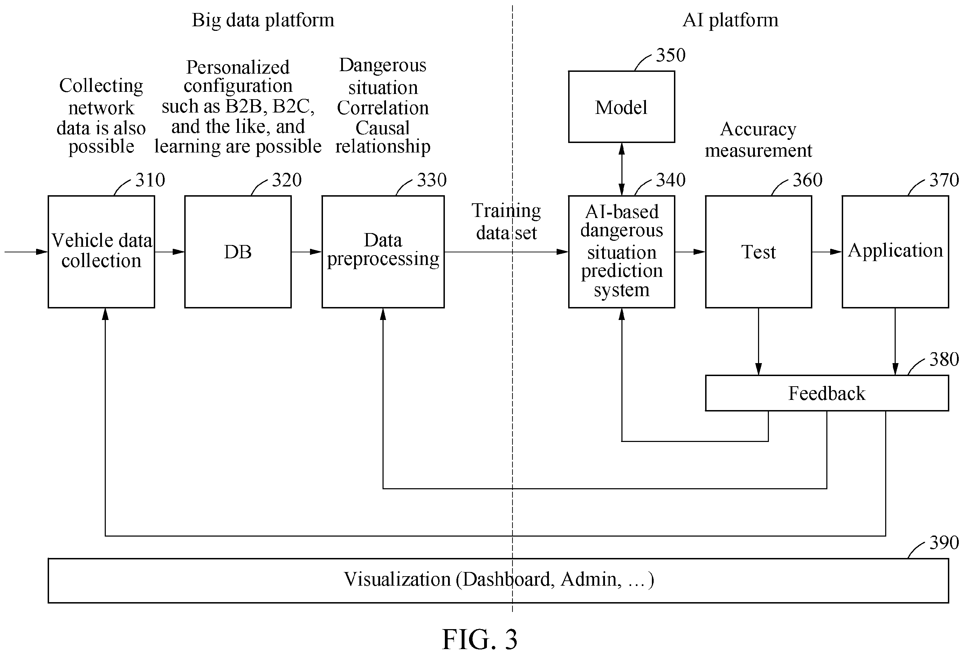

Training and verification processes of the neural network will be described in more detail with reference to FIG. 3.

The processor 200 may support the driver of the vehicle based on the predicted danger. The processor 200 may visualize the predicted danger and provide the visualized danger to the driver. A process of supporting the driver will be described in detail with reference to FIG. 3.

The memory 300 may store instructions (or programs) executable by the processor 200. For example, the instructions may include instructions for executing an operation of the processor 200 and/or an operation of each component of the processor 200.

The memory 300 may be implemented as a volatile memory device or a nonvolatile memory device.

The volatile memory device may be implemented as dynamic random access memory (DRAM), static random access memory (SRAM), thyristor RAM (T-RAM), zero capacitor RAM (Z-RAM), or twin transistor RAM (TTRAM).

The nonvolatile memory device may be implemented as electrically erasable programmable read-only memory (EEPROM), flash memory, magnetic RAM (MRAM), spin-transfer torque (STT) - MRAM, conductive bridging RAM (CBRAM), ferroelectric RAM (FeRAM), phase change RAM (PRAM), resistive RAM (RRAM), nanotube RRAM, polymer RAM (PoRAM), nano floating gate memory (NFGM)), holographic memory, molecular electronic memory device, or insulator resistance change memory.

FIG. 3 illustrates an example of a platform included in the driving support apparatus illustrated in FIG. 1.

Referring to FIG. 3, the driving support apparatus 10 may train a neural network based on a personalized driving record and a dangerous situation, and may support a driver based on the trained neural network to promote safe driving.

The driving support apparatus 10 may include a plurality of platforms. For example, the driving support apparatus 10 may include a big data platform and an AI platform. The big data platform and the AI platform may be implemented by the same processor or different processors.

The big data platform may collect vehicle data and perform preprocessing on the collected vehicle data. In order to improve the accuracy of predicting a danger, preprocessing of data may include a process of selecting vehicle data in consideration of a correlation among an exact dangerous situation, determination of vehicle failure, and a danger factor, and a causal relationship between the danger factor and a driving situation, and assigning a weight to the selected data.

The big data platform may generate a training data set by preprocessing the vehicle data. The big data platform may output the training data set to the AI platform.

The collector 100 may collect vehicle data (310). The collector 100 may also collect data through a network. A database (DB) may store the collected vehicle data (320). The DB may personalize the collected vehicle data for each server or terminal. The DB may include the memory 300.

Data included in the DB may be represented as shown in Table 1.

**[Table 1]**

| Vehicle data type | AI data type | Description | Contents |
|---|---|---|---|
| Identity | A | User identification (ID) | ID, nickname, ... |
| Ab stract | A | Driving record | Distance, speed, ... |
| On board diagnostics (OBD) | A | Vehicle information | Engine Status, ... |
| Advanced driver assistant system (ADAS)/driver status monitoring (DSM) | A | Road/driver information | Forward collision warning (FCW), lane departure warning (LDW), ... |
| Smart device | A | Sensor information | Acceleration, angle, ... |
| Phone use | A | Carelessness information | Touch, move, ... |
| Score | A | Driving style | Economic, safety, ... |
| GPS | A | Global positioning system | Time, location, ... |
| Prediction | C | AI danger prediction | Danger type, grade, ... |
| Warning | B | Dangerous situation | DTC code, turn, acceleration, ... |
| Detailed data | A | Detailed driving information | Fuel, time, ... |
| Reserved | - | - | - |

The identity may refer to user information, and the abstract may refer to a summary of driving data. The OBD may refer to real-time vehicle data, and the ADAS/DSM may refer to data of an advanced driving assistant device.

The smart device may refer to sensor data obtained from a platform of an application, and the phone use may refer to smartphone use information. The score may refer to a driving score, and the driving score may include an economic score and a safety score. warning on

The prediction may refer to data on a predicted dangerous situation, and the warning may refer to a warning on a dangerous situation. The detailed data may refer to detailed driving record data. The detailed driving record data may refer to time series data in seconds. The reserved may refer to a spare field.

In the AI data type, A may refer to driving data, B may refer to an actual dangerous situation, and C may refer to a prediction result of a danger prediction algorithm.

Data stored in the DB may be transmitted and received between a smartphone application and a network server. The data stored in the DB may include driving data and dangerous situation data.

The processor 200 may perform preprocessing on the collected vehicle data (330). The processor 200 may refine the vehicle data. The processor 200 may perform preprocessing on the vehicle data in consideration of a correlation and causal relationship between a dangerous situation and the vehicle data. The processor 200 may generate a training data set through the preprocessing of the vehicle data.

The AI platform may train the neural network based on the vehicle data and/or training data set received from the big data platform, and may predict a danger related to driving based on the trained neural network.

The processor 200 may train the neural network by using the data shown in Table 1. For example, the processor 200 may select a record (for example, a sudden turn) to be trained from among the dangerous situation data, and may search for related driving data by using an ID of the selected record. The processor 200 may train the neural network by setting the searched driving data as an input and the selected record as an output.

The neural network may include a deep learning model 350. The processor 200 may perform a test for the predicted danger based on the neural network (360). The processor 200 may apply the predicted danger situation to a driving situation based on the neural network (370). The processor 200 may feed a result derived by the test and application back to a neural network model (380).

The processor 200 may train the neural network based on personalized vehicle data. The processor 200 may train the neural network based on a part of the personalized vehicle data, and may verify the neural network based on the personalized vehicle data.

The processor 200 may train the neural network based on a part of the driving data, and may verify the neural network based on a remaining part of the driving data.

For example, the processor 200 may train the neural network by using 70% of the driving data, and may verify the neural network by using the remaining 30% of the driving data.

The processor 200 may support driving of the driver based on the predicted danger. The processor 200 may visualize the predicted danger and provide the visualized danger to the driver. The visualized danger may include a change in a driving condition and maintenance of the vehicle.

For example, the processor 200 may provide guidance on acceleration or deceleration to the driver to improve the dangerous situation. When a failure of the vehicle is predicted, the processor 200 may provide guidance on the maintenance of the vehicle and replacement of parts.

The processor 200 may perform a customized driving support suitable for a personal driving style and driving record of the driver. The processor 200 may provide a distributed service by performing federated training of the neural network. A training platform may vary depending on an attribute of the predicted danger.

The processor 200 may perform danger prediction in seconds. The processor 200 may predict a danger in real time. For example, the processor 200 may predict the danger at a processing speed of 500 msec or less. The processor 200 may perform a danger prediction algorithm by collecting vehicle data, smartphone data, and camera data, thereby performing a process of generating a prediction result within 500 msec. In order to perform real-time prediction, it is also possible to perform prediction, excluding the camera data.

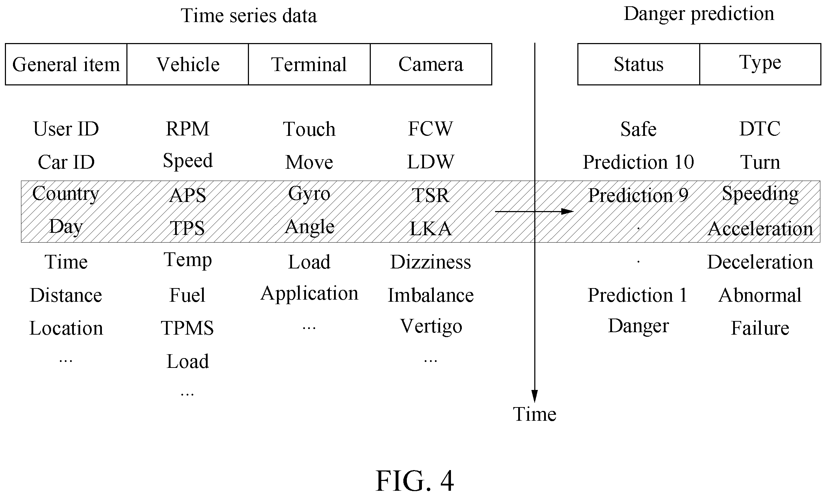

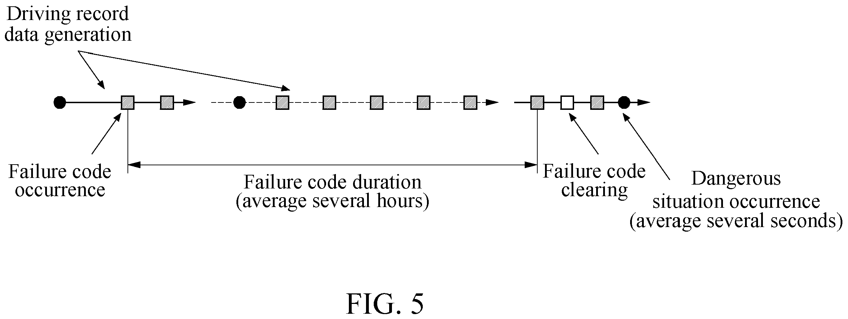

FIG. 4 illustrates an example of vehicle data, and FIG. 5 illustrates a relationship between driving data, vehicle failure data, and dangerous situation data.

Referring to FIGS. 4 and 5, the vehicle data may be time series data. The vehicle data may include ECU data, camera data, network data, smartphone data, and data by an image processor.

A general item of the vehicle data may include user ID, car ID, country, day, time, distance, and location.

A vehicle item of the vehicle data may include rotation per minute (RPM), speed, accelerator position sensor (APS), throttle position sensor (TPS), temperature, fuel, tire pressure monitoring system (TPMS), and load.

A terminal item may include touch, move, gyroscope, angle, load, and application. The terminal may include a mobile device. For example, the terminal may include a mobile phone.

A camera item may include forward collision warning (FCW), lane departure warning (LDW), traffic sign recognition (TSR), lane keeping assist (LKA), dizziness, imbalance, and vertigo.

The processor 200 may predict a danger based on the vehicle data. A status item of the predicted danger may include a safety status and a danger status. A type of the predicted danger may include a DTC, turn, speeding, acceleration, jackrabbit, abnormal, and failure.

As illustrated in FIG. 5, the danger may include a danger occurring during driving and a danger occurring regardless of driving. The danger occurring during driving may correspond to dangerous situation data, and the danger occurring regardless of driving may correspond to vehicle failure data.

The danger occurring during driving may occur instantaneously in the same way as sudden acceleration, sudden deceleration, and speeding. The danger occurring during driving may be an instantaneous danger that lasts for several seconds.

The danger occurring regardless of driving may include a failure of a vehicle. The failure may last for hours or longer in the same way as a problem with parts of the vehicle.

Since the dangerous situation data and the vehicle failure data have different attributes, the processor 200 may train the neural network by using different training conditions with respect to the dangerous situation data and the vehicle failure data.

The neural networks that are trained by using the danger situation data and the vehicle failure data may be the same or different. For example, the processor 200 may train a first neural network based on the vehicle failure data, and may train a second neural network based on the dangerous situation data.

Here, the processor 200 may train the first neural network based on a plurality of pieces of driving data, and may train the second neural network based on one piece of driving data. A difference between the training conditions of the dangerous situation data and the vehicle failure data may be represented as shown in Table 2.

**[Table 2]**

| Item | Dangerous situation | Vehicle failure |
|---|---|---|
| Danger example | Sudden turn, sudden deceleration, speeding, and the like | DTC |
| Characteristic | Lasting instantaneously (several seconds) | Lasting more than a certain period of time (several hours) |
| Training input | One piece of driving record data | Over multiple pieces of driving record data |
| Training output | Sudden turn, sudden deceleration, speeding, and the like | Fuel, ignition, shifting, and the like. |
| Real-time | Necessary | Unnecessary |
| Implementation | mobile | Server |
| location | | |
| DB | SQLite | MySQL |

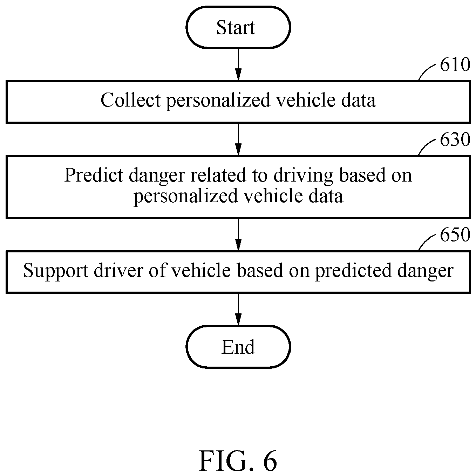

FIG. 6 illustrates a sequence of operations of the driving support apparatus illustrated in FIG. 1.

Referring to FIG. 6, the collector 100 may collect personalized vehicle data (610). Specifically, the collector 100 may collect driving data, vehicle failure data, and dangerous situation data.

The processor 200 may predict a danger related to driving based on the personalized vehicle data (630). The processor 200 may predict whether a driver suddenly accelerates, suddenly decelerates, speeds, and suddenly turns based on the personalized vehicle data.

The processor 200 may train a neural network based on the personalized vehicle data. The processor 200 may include predicting a danger by using the trained neural network.

The processor 200 may train the neural network based on a part of the personalized vehicle data, and may verify the neural network based on a remaining part of the personalized vehicle data.

The processor 200 may train a first neural network based on the vehicle failure data, and may train a second neural network based on the dangerous situation data.

The processor 200 may train the first neural network based on a plurality of pieces of driving data. The processor 200 may train the second neural network based on one piece of driving data.

The processor 200 may support a driver of a vehicle based on the predicted risk (650).

The method according to the example embodiments may be implemented in the form of a program instruction that may be executed through various computer mechanisms, thereby being recorded in a computer-readable medium. The computer-readable medium may include program instructions, data files, data structures, and the like, independently or in combination thereof. The program instructions recorded in the medium may be specially designed and configured for the example embodiments, or may be known to those skilled in the art of computer software so as to be used. An example of the computer-readable medium includes a hard disk, a magnetic media such as a floppy disk and a magnetic tape, an optical media such as a CD-ROM and a DVD, a magnetooptical media such as a floptical disk, and a hardware device specially configured to store and execute a program instruction such as ROM, RAM, and flash memory. An example of the program instruction includes a high-level language code to be executed by a computer using an interpreter or the like, as well as a machine code generated by a compiler. The above hardware device may be configured to operate as at least one software module to perform the operations of the example embodiments, and vise versa.

The software may include a computer program, a piece of code, an instruction, or some combination thereof, to independently or collectively instruct or configure the processing device to operate as desired. Software and data may be embodied permanently or temporarily in any type of machine, component, physical or virtual equipment, computer storage medium or device, or in a propagated signal wave capable of providing instructions or data to or being interpreted by the processing device. The software also may be split over network coupled computer systems so that the software is stored and executed in a split fashion. The software and data may be stored by one or more computer readable recording mediums.

Although the above example embodiments have been described with reference to the limited embodiments and drawings, however, it will be understood by those skilled in the art that various changes and modifications may be made from the above-mentioned description. For example, even though the described descriptions are performed in an order different from the described manner, and/or the described components such as system, structure, device, and circuit are coupled or combined in a form different from the described manner, or replaced or substituted by other components or equivalents, appropriate results may be achieved.

Therefore, other implementations, other example embodiments, and equivalents to the claims are also within the scope of the following claims.

## Claims

1. A driving support method comprising:
collecting personalized vehicle data;
predicting a danger related to driving based on the personalized vehicle data; and
supporting a driver of a vehicle based on the predicted danger.

2. The driving support method of claim 1, wherein the collecting comprises:
collecting driving data, vehicle failure data, and dangerous situation data.

3. The driving support method of claim 1, wherein the predicting comprises:
predicting whether the driver suddenly accelerates, suddenly decelerates, speeds, and suddenly turns based on the personalized vehicle data.

4. The driving support method of claim 1, wherein the predicting comprises:
training a neural network based on the personalized vehicle data; and
predicting the danger by using the trained neural network, and
the training comprises:
training the neural network based on a part of the personalized vehicle data; and
verifying the neural network based on a remaining part of the personalized vehicle data.

5. The driving support method of claim 4, wherein the training comprises:
training a first neural network based on vehicle failure data; and
training a second neural network based on dangerous situation data,
the training of the first neural network comprises training the first neural network based on a plurality of pieces of driving data, and
the training of the second neural network comprises training the second neural network based on one piece of driving data.

6. A driving support apparatus comprising:
a collector configured to collect personalized vehicle data; and
a processor configured to predict a danger related to driving based on the personalized vehicle data and support a driver of a vehicle based on the predicted danger.

7. The driving support apparatus of claim 6 wherein the collector is configured to collect driving data, vehicle failure data, and dangerous situation data.

8. The driving support apparatus of claim 6, wherein the processor is configured to predict whether the driver suddenly accelerates, suddenly decelerates, speeds, and suddenly turns based on the personalized vehicle data.

9. The driving support apparatus of claim 6, wherein the processor is configured to:
train a neural network based on the personalized vehicle data; and
predict the danger by using the trained neural network,
wherein the neural network is trained based on a part of the personalized vehicle data, and is verified based on a remaining part of the personalized vehicle data.

10. The driving support apparatus of claim 9, wherein the processor is configured to:
train a first neural network based on vehicle failure data; and
train a second neural network based on dangerous situation data,
wherein the first neural network is trained based on a plurality of pieces of driving data, and the second neural network is trained based on one piece of driving data.

## Amended claims

### Amended claims in accordance with Rule 137(2) EPC.

1. A driving support method comprising:
collecting personalized vehicle data (610),
wherein the collecting comprises:
collecting the personalized vehicle data including driving data, vehicle failure data, and dangerous situation data,
wherein the driving data refer to data generated during driving of a vehicle and include data collected in the vehicle,
wherein the vehicle failure data, corresponds to danger occurring regardless of the driving, refers to data representing a status of the vehicle including a diagnostic trouble code, and
wherein the dangerous situation data refers to data related to a dangerous situation occurring during the driving and is obtained by analyzing the data collected in the vehicle;
predicting a danger related to driving based on the personalized vehicle data (630),
wherein the predicting comprises:
training a neural network based on the personalized vehicle data; and
predicting the danger by using the trained neural network, and
the training comprises:
training the neural network based on a part of the personalized vehicle data; and
verifying the neural network based on a remaining part of the personalized vehicle data, and
wherein the training the neural network comprises:
training a first neural network based on the vehicle failure data; and
training a second neural network based on the dangerous situation data,
wherein a training input for the vehicle failure data is a plurality of pieces of the driving data, and the training input for the dangerous situation data is based on one piece of the driving data, and
wherein the driving data is represented as a time series data in seconds; and
supporting a driver of a vehicle based on the predicted danger (650).

2. The driving support method of claim 1, wherein the predicting comprises:
predicting whether the driver suddenly accelerates, suddenly decelerates, speeds, and suddenly turns based on the personalized vehicle data.

3. A driving support apparatus (10) comprising:
a collector (100) configured to collect personalized vehicle data,
wherein the collecting comprises:
collecting the personalized vehicle data including driving data, vehicle failure data, and dangerous situation data,
wherein the driving data refer to data generated during driving of a vehicle and include data collected in the vehicle,
wherein the vehicle failure data, corresponds to danger occurring regardless of the driving, refers to data representing a status of the vehicle including a diagnostic trouble code, and
wherein the dangerous situation data refers to data related to a dangerous situation occurring during the driving and is obtained by analyzing the data collected in the vehicle; and
a processor (200) configured to predict a danger related to driving based on the personalized vehicle data and support a driver of a vehicle based on the predicted danger,
wherein the predicting comprises:
training a neural network based on the personalized vehicle data; and
predicting the danger by using the trained neural network, and
the training comprises:
training the neural network based on a part of the personalized vehicle data; and
verifying the neural network based on a remaining part of the personalized vehicle data, and
wherein the training the neural network comprises:
training a first neural network based on the vehicle failure data; and
training a second neural network based on the dangerous situation data,
wherein a training input for the vehicle failure data is a plurality of pieces of the driving data, and the training input for the dangerous situation data is based on one piece of the driving data, and
wherein the driving data is represented as a time series data in seconds.

4. The driving support apparatus (10) of claim 3, wherein the processor is configured to predict whether the driver suddenly accelerates, suddenly decelerates, speeds, and suddenly turns based on the personalized vehicle data.
